(19) **Europäisches Patentamt**
**European Patent Office**
**Office européen des brevets**

(11) **EP 4 273 756 A1**

(12) **EUROPEAN PATENT APPLICATION**

(43) Date of publication:
**08.11.2023 Bulletin 2023/45**

(51) International Patent Classification (IPC):
***G06N 3/08*** *(2023.01)*

(21) Application number: **22172147.5**

(52) Cooperative Patent Classification (CPC):
**G06N 3/08**

(22) Date of filing: **06.05.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Fischer, Volker**
**71272 Renningen (DE)**
• **Moskalev, Artem**
**1091BD Amsterdam (NL)**
• **Smeulders, Arnold**
**1074BH Amsterdam (NL)**

(54) **COMPUTER IMPLEMENTED METHOD AND APPARATUS FOR UNSUPERVISED REPRESENTATION LEARNING**

(57) An apparatus and a computer implemented method for unsupervised representation learning, the method comprising providing (204) an input data set comprising samples of a first domain and samples of a second domain, providing (206) a reference assignment between pairs of one sample from the first domain and one sample from the second domain, providing (208) an encoder that is configured to map a sample of the input data set depending on at least one parameter of the encoder to an embedding, providing (210) a similarity kernel for determining a similarity between embeddings, in particular a kernel for determining an preferably Euclidean distance between the embeddings, determining (212) with the encoder embeddings of samples from the first domain and embeddings of samples from the second domain, determining (214) with the similarity kernel similarities for pairs of one embedding of a sample from the first domain and one embedding of a sample from the second domain, determining (216) at least one parameter of the encoder depending on a loss, wherein the loss depends on a first cost for the similarities of pairs of one embedding of a sample from the first domain and one embedding of a sample from the second domain that are assigned to each other according to the reference assignment and an estimate for a second cost for the similarities for pairs of one embedding of a sample from the first domain and one embedding of a sample from the second domain that are assigned to each other according to a possible assignment of a plurality of possible assignments between pairs of one sample from the first domain and one sample from the second domain.

**Fig. 2**

**Description**

Background

The invention relates to a computer implemented method and an apparatus for unsupervised representation learning.

Representation learning is required for multiple tasks ranging from autonomous driving to speech understanding. At the core of representation learning is a network architecture that produces embeddings, i.e. representations, for input objects and a task-driven loss function which requires representations to be informative.

Common loss functions for representation learning, such as cross-entropy for example, rely on annotated label supervision. When such supervision is not available, self-supervised methods are employed. The center idea of most of the self-supervised methods is to maximize the mutual information between different views of original data, e.g. as disclosed in Ting Chen, Calvin Luo, Lala Li. Intriguing Properties of Contrastive Losses. https://arxiv.org/abs/2011.02803.

Practically, the different views can be achieved by augmenting the original data to provide augmented data and then maximizing a similarity of the augmented data and the original data, e.g. as disclosed in Ting Chen, Simon Kornblith, Mohammad Norouzi, Geoffrey Hinton. A Simple Framework for Contrastive Learning of Visual Representations. https://arxiv.org/abs/2002.05709.

The resulting supervision method ends up performing surprisingly well on a range of tasks. It, however, was noticed e.g. in Yazhe Li, Roman Pogodin, Danica J. Sutherland, Arthur Gretton. Self-Supervised Learning with Kernel Dependence Maximization. https://arxiv.org/abs/2106.08320 that such a good performance can not only be explained from the mutual information perspective.

Disclosure of the invention

The computer implemented method and apparatus for unsupervised representation learning according to the independent claims provide a perspective based on structured assignment learning.

The computer implemented method of unsupervised representation learning comprises providing an input data set comprising samples of a first domain and samples of a second domain, providing a reference assignment between pairs of one sample from the first domain and one sample from the second domain, providing an encoder that is configured to map a sample of the input data set depending on at least one parameter of the encoder to an embedding, providing a similarity kernel for determining a similarity between embeddings, in particular a kernel for determining an preferably Euclidean distance between the embeddings, determining with the encoder embeddings of samples from the first domain and embeddings of samples from the second domain, determining with the similarity kernel similarities for pairs of one embedding of a sample from the first domain and one embedding of a sample from the second domain, determining at least one parameter of the encoder depending on a loss, wherein the loss depends on a first cost for the similarities of pairs of one embedding of a sample from the first domain and one embedding of a sample from the second domain that are assigned to each other according to the reference assignment and an estimate for a second cost for the similarities for pairs of one embedding of a sample from the first domain and one embedding of a sample from the second domain that are assigned to each other according to a possible assignment of a plurality of possible assignments between pairs of one sample from the first domain and one sample from the second domain. The loss depends on a discrepancy between a ground truth cost and an induced cost. The ground truth cost, i.e. the first cost, is the cost of a reference assignment. The ground truth cost depends on the reference assignment of the underlying assignment problem. The induced cost, i.e. the second cost, is an estimate for a solution to the assignment problem. The assignment problem may be a linear or a quadratic assignment problem. The induced cost depends on at least one possible assignment of the assignment problem. Using an estimate for the induced cost allows to determine the parameter while it may be computationally intractable otherwise. In the absence of a large amount of annotated data, this provides an efficient unsupervised or self-supervised representation learning.

The first cost preferably depends on a sum of the similarities between the embeddings that are assigned to each other according to the reference assignment.

The loss preferably comprises a difference between the first cost and the estimate for the second cost. The loss is either a sparsely-smoothed structured linear assignment loss or a higher-order representation loss function comprising the estimate. This loss is used to train the encoder, e.g. a neural architecture representing the encoder, in cases when no annotated data is available. This approach may be used as an add-on in any existing deep-learning perception network for various down-stream applications. Since the method operates on the representation, it does not require modifying or interfering with the internal mechanics of the backbone algorithm or the down-stream task based on it.

Preferably, the method comprises providing a function that is configured to map a plurality of sums of the similarities between embeddings that are assigned to each other according to different possible assignments to a possible cost for the plurality of possible assignments, wherein the possible cost is weighted by a weight, wherein the function is configured to map a plurality of sums of negatives of the similarities between the embeddings that are assigned to each other according to the different possible assignments to a virtual cost, wherein the weight depends on a projection, in particular a minimum distance Euclidean projection, of the virtual cost to a simplex that has one dimension less than the plurality of possible assignments, and wherein the second cost depends on the possible cost that is weighted by the weight. This facilitates the computation of the estimate for the second cost.

The method preferably comprises determining with the similarity kernel a first matrix comprising as its elements similarities for pairs of one embedding of a sample from the first domain and one embedding of a sample from the first domain, and a second matrix comprising as its elements similarities for pairs of one embedding of a sample from the second domain and one embedding of a sample from the second domain, wherein the second cost depends on a sum of the similarities between the embeddings within the first domain that are assigned according to the reference assignment, and the similarities between the embeddings within the second domain that are assigned according to the reference assignment, and on a maximum scalar product between the eigenvalues of the first matrix and the eigenvalues of the second matrix. This facilitates the computation of the estimate for the quadratic assignment problem.

The method preferably comprises providing a matrix comprising as its elements the reference assignment, providing a matrix comprising as its elements the possible assignment, providing a matrix comprising as its elements the similarities between respective pairs of embeddings. This facilitates the computation of the estimate for the assignment problem.

The method may comprise determining the at least one parameter of the encoder depending on a solution to an optimization problem that is defined depending on the loss.

The method may comprise providing samples of the first domain and of the second domain, wherein providing the input data set comprises determining a first number of first samples that is a subset of the samples comprising samples of the first domain and determining a second number of second samples that is a subset of the samples comprising samples of the second domain. This way different views of the samples are used which improves the result of the unsupervised representation learning.

The apparatus for unsupervised representation learning comprises at least one processor and at least one memory for storing computer readable instructions, that when executed by the at least one processor cause the apparatus to perform steps in the method, wherein the at least one processor is configured to execute the computer readable instructions. This apparatus has the advantages of the method.

A computer program may be provided, wherein the computer program comprises computer readable instructions, that when executed by a computer, cause the computer to perform steps in the method.

Further embodiments are derived from the following description and the drawing. In the drawing

Fig. 1 schematically depicts an apparatus for representation learning,
Fig. 2 depicts a method of representation learning,
Fig. 3 depicts a method of operating a technical system.

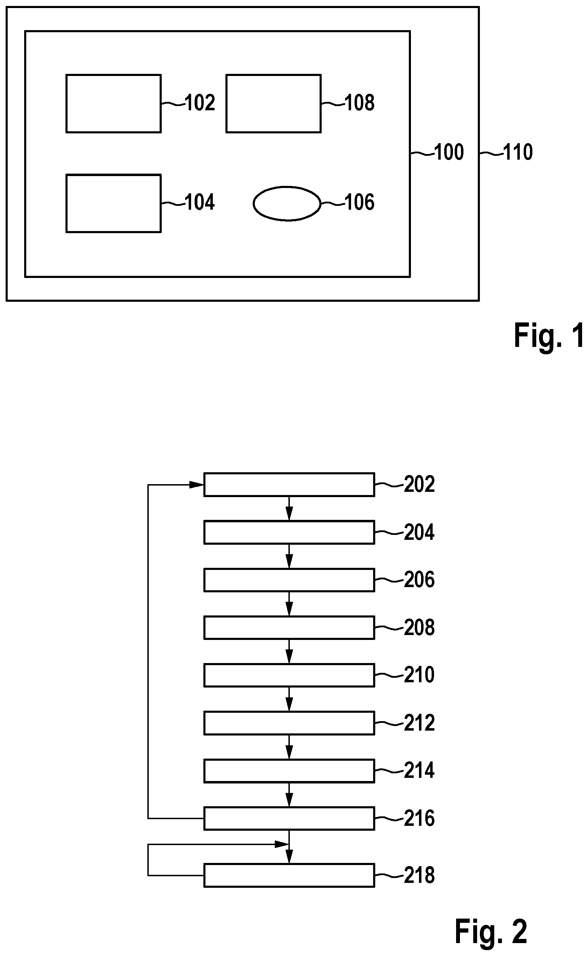

Figure 1 depicts an apparatus 100 for unsupervised representation learning schematically. The apparatus 100 comprises at least one processor 102 and at least one memory 104.

The at least one processor 102 is configured to execute computer readable instructions.

The at least one memory 104 is configured for storing computer readable instructions.

The computer readable instructions are configured so that when they are executed by the at least one processor 102, they cause the apparatus 100 to perform steps in a method of unsupervised representation learning that is described below.

In one example, a computer program comprises the computer readable instructions.

The computer program is in one example stored on the at least one memory 104. The at least one processor 102 in one example executes the computer program.

The apparatus 100 may comprise a capturing device 106 configured to capture an input. The input may comprise an audio signal or a digital image. The capturing device 106 may comprise a microphone or a camera or a Radar sensor or a LiDAR Sensor or an ultrasound sensor or an infrared sensor or a motion sensor. The digital image may be a representation of a scene that is visible for a human. The digital image may be a representation of the scene by a radar image or a LiDAR image or an ultrasound image or an infrared image.

The apparatus 100 may comprise an actuator 108 configured to determine an action depending on the input. The action may be an instruction for operating a technical system 110. The technical system 110 may be capable of autonomous operation.

The technical system 110 may be a robot, in particular a vehicle, a manufacturing machine, a household appliance, a power tool, a personal assistance device or an access control system. The technical system 110 may comprise the apparatus 100 or be configured to be operated according to its instructions.

Figure 2 depicts steps in the method of unsupervised representation learning. The method is described below for the linear and the quadratic assignment problem.

The method comprises a step 202.

In step 202, the method comprises providing samples D. The samples D are e.g. provided from the at least one memory 104. The samples D comprise samples of a first domain D1 and of a second domain D2. The samples D may comprise samples of other domains as well.

The samples D comprise at least N1 samples $D1_i$, $i = 1, ... N1$ of the first domain D1. The samples D comprise at least N2 samples $D1_j, j = 1, ... N2$ of the second domain D2. The first domain D1 may comprise more than N1 samples of the first domain D1. The second domain D2 may comprise more than N2 samples of the second domain D1.

The method comprises a step 204.

In step 204 the method comprises providing 204 an input data set.

The input data set comprises N1 samples $D1_i$, $i = 1, ... N1$ of the first domain D1. The input data set comprises N2 samples $D1_j, j = 1, ... N2$ of the second domain D2.

In an example, providing the input data set comprises determining a first number N1 of first samples $D1 = D1_i$ $= 1, ... N1$ that is a subset of the samples D. The subset represents a first view on the samples D.

In an example, providing the input data set comprises determining a second number N2 of second samples $D2 = D2_j = 1, ... N2$ that is a subset of the samples D. The subset represents a second view on the samples D.

In the example, the subset are of the same size $N = N1 = N2$.

The steps 202 and 204 are optional. The method may start by providing the input data set, e.g. from the at least one memory 104.

Afterwards a step 206 is executed.

In step 206, the method comprises providing a reference assignment $Y_{gt}$ between pairs of one sample $D1_i$ from the first domain and one sample $D2_j$ from the second domain.

The method may comprise providing a matrix $Y_{gt}$ comprising as its elements the reference assignment.

Afterwards a step 208 is executed.

In step 208, the method comprises providing an encoder f(x) that is configured to map a sample x of the input data set depending on at least one parameter $\Theta$ of the encoder f(x) to an embedding.

In one example the encoder is a function $f_{\Theta}(x) : D \rightarrow R^{N \times E}$, which outputs an embedding vector of dimension E for each of its objects, i.e. each sample x.

Afterwards a step 210 is executed.

In step 210, the method comprises providing a similarity kernel s(f(x,y) for determining a similarity between embeddings (x,y).

The kernel is in one example configured for determining a distance between the embeddings (x,y). Preferably, the kernel is configured for determining an Euclidean distance between the embeddings (x,y).

Afterwards a step 212 is executed.

In step 212, the method comprises determining with the encoder f(x) embeddings $f(D1_i)$ of samples $D1_i$ from the first domain D1 and embeddings $f(D2_j)$ of samples $D2_j$ from the second domain D2.

Afterwards a step 214 is executed.

In step 214, the method comprises determining with the similarity kernel s(f(x,y) similarities $S_{ij} = s(f[D1_i], f[D2_j])$ for pairs of one embedding $f[D1_i]$ of a sample from the first domain D1 and one embedding $f[D2_j]$ of a sample from the second domain D2.

The method may comprise providing a matrix S comprising as its elements the similarities $s(f[D1_i], f[D2_j])$ between respective pairs of embeddings.

Afterwards a step 216 is executed.

In step 216, the method comprises determining at least one parameter $\theta$ of the encoder $f_{\theta}(x)$ depending on either a loss for the linear or for the quadratic assignment problem.

The task is to learn such $f_{\theta}(x)$ that embeddings of objects from the same class are pushed together, while embeddings of the objects from different classes are pushed apart.

The method may comprise determining the at least one parameter $\theta$ of the encoder f(x)) depending on a solution to an optimization problem that is defined depending on the loss.

Linear assignment problem: Given two input sets $f(D1) = \{f(d1_i)\}_{i=1}^{N1}$ and $f(D2) = \{f(d2_j)\}_{j=1}^{N2}$, the matrix S is an inter-set similarity matrix $S \in R^{N1 \times N2}$ between each element in input set $f(D1)$ and each element in input set $f(D2)$.

This means, the similarity matrix S measures the distance between the elements of the sets, i.e. $[S]_{i,j} = \phi(f(d1_i), (d2_j))$, where $\phi$ is a metric function, e.g. Euclidean distance.

The goal of linear assignment problem is to find one-to-one assignment y(S), such that the sum of distances between assigned elements is minimized:

$$\hat{y}(S) = \underset{y \in \Pi}{\arg\min}\, tr(SY^T)$$

where $\Pi$ corresponds to a plurality of possible assignments, in particular a set of all $N1$ x $N2$ permutation matrices.

Quadratic assignment problem: Given two input sets $f(D1) = \{f(d1_i)\}_{i=1}^{N1}$ and $f(D2) = \{f(d2_j)\}_{j=1}^{N2}$, the matrix S is an inter-set similarity matrix $S \in R^{N1 \times N2}$ between each element in input set $f(D1)$ and each element in input set $f(D2)$.

This means, the similarity matrix S measures the distance between the elements of the sets, i.e. $[S]_{i,j} = \phi(f(d1_i), (d2_j))$, where $\phi$ is a metric function, e.g. Euclidean distance.

Additionally, the first matrix $S_{D1}$ is an intra-set similarity matrix $S_{D1} \in R^{N1 \times N2}$ within the set D1 and the second matrix $S_{D2}$ is an intra-set similarity matrix $S_{D2} \in R^{N2 \times N2}$

This means, the first matrix $S_{D1}$ measures the distance between the elements within the set, i.e. $[S_{D1}]_{i,j} = \phi(f(d1_i), (d1_j))$, where $\phi$ is a metric function, e.g. Euclidean distance.

This means, the second matrix $S_{D2}$ measures the distance between the elements within the set, i.e. $[S_{D2}]_{i,j} = \phi(f(d2_i), (d2_j))$, where $\phi$ is a metric function, e.g. Euclidean distance.

The goal of quadratic assignment problem is to find one-to-one assignment $\hat{y}_Q(S, S_{D1}, S_{D2})$, such that the sum of distances between assigned elements is minimized:

$$Q_\alpha(S, S_{D1}, S_{D2}) = \underset{y \in \Pi}{\min}\{tr(SY^T) + \alpha \cdot tr(S_{D1}YS_{D2}^T Y^T)\}$$

where $\Pi$ corresponds to a plurality of possible assignments, in particular a set of all permutation matrices and $\alpha \geq 0$ is a scalar. The linear assignment problem is derived from this quadratic assignment problem by setting $\alpha = 0$.

The loss for the linear assignment problem is in one example a sparsely-smoothed structured linear assignment loss:

$$L(S, Y_{gt}) = tr(SY_{gt}^T) - sparsemax[\tilde{x}(-S)]^T \tilde{x}(S)$$

wherein $tr$ is the trace, $\tilde{x}(S) = [tr(SY_1^T, \ldots, tr(SY_K^T))]$ is a function $\tilde{x}: R^{N \times N} \to R^{M!}$ that yields a realization of all K possible costs and sparsemax is defined as a minimum distance Euclidean projection of $\tilde{x}(-S)$ to a K-1-dimensional simplex, e.g. as described in Martins, A. F. T. and Astudillo, R. F. From softmax to sparsemax: A sparse model of attention and multi-label classification. In Proceedings of the 33rd International Conference on International Conference on Machine Learning, ICML'16, 2016:

$$Sparsemax\,(z) = \arg\min \|p - z\|^2$$

wherein $p \in \Delta^{K-1}$ and $\Delta^{K-1}$ is the K-1 dimensional simplex.

The loss $L_{HO}$ for the quadratic assignment problem is in one example a higher-order representation loss:

$$L_{HO} = L(S, Y_{gt}) - \frac{\alpha}{2}[tr(S_{D1}Y_{gt}S_{D2}^T Y_{gt}^T) + \langle \lambda_{D1}, \lambda_{D2} \rangle_+]$$

wherein $L(S, Y_{gt})$ is the linear assignment loss and $\langle \lambda_{D1}, \lambda_{D2} \rangle_+$ is a maximum scalar product between eigenvalues of the matrices $S_{D1}$ and $S_{D2}$.

This means, for these assignment problems, the loss depends on a first cost for the similarities $S_{ij} = s(f[D1_i], f[D2_j])$ for pairs of one embedding $f[D1_i]$ of a sample from the first domain D1 and one embedding $f[D2_j]$ of a sample from the second domain D2 that are assigned to each other according to the reference assignment $Y_{gt}$.

The first cost depends on a sum $tr(SY_{gt}^T)$ of the similarities $S_{ij} = s(f[D1_i], f[D2_j])$ between the embeddings

$f[D1_i], f[D2_j]$ that are assigned to each other according to the reference assignment $Y_{gt}$.

The loss comprises a difference between the first cost and an estimate for a second cost.

For these assignment problems, the loss depends on an estimate for the second cost for the similarities $S_{ij} = s(f[D1_i], f[D2_j])$ for pairs of one embedding $f[D1_i]$ of a sample from the first domain D1 and one embedding $f[D2_j]$ of a sample from the second domain D2 that are assigned to each other according to a possible assignment $Y \in \Pi$ of the plurality $\Pi$ of possible assignments between pairs of one sample from the first domain D1 and one sample from the second domain D2. Preferably, a matrix $Y \in \Pi$ is provided that comprises as its elements the possible assignment.

In the linear assignment problem, the method comprises providing the function $\tilde{x}$. The function $\tilde{x}$ is configured to map a plurality of sums $tr(SY_1^T)$ , ..., $(SY_K^T)$ of the similarities $S_{ij} = s(f[D1_i], f[D2_j])$ between embeddings that are assigned to each other according to different possible assignments $Y_1^T$ ,..., $Y_K^T$ to a possible cost for the plurality of possible assignments $\Pi$. The function $\tilde{x}$ is configured to map a plurality of sums $tr(SY_1^T)$ , ..., $(SY_K^T)$ of negatives of the similarities $-S_{ij} = -s(f[D1_i], f[D2_j])$ between embeddings that are assigned to each other according to different possible assignments $Y_1^T$ ,..., $Y_K^T$ to a virtual cost.

In the linear assignment problem, the second cost depends on the possible cost that is weighted by a weight $sparsemax[\tilde{x}(-S)]^T$.

The weight $sparsemax[\tilde{x}(-S)]^T$ depends on the projection, in particular the minimum distance Euclidean projection, e.g. sparsemax, of the virtual cost $\tilde{x}(-S)$ to the k-dimensional simplex. This simplex has one dimension less than the plurality of possible assignments $\Pi$.

In the quadratic assignment problem, the method comprises determining with the similarity kernel s(f(x,y) the first matrix $S_{D1}$ and the second matrix $S_{D2}$.

In the quadratic assignment problem, the second cost depends on a sum $tr(S_{D1}Y_{gt}S_{D2}^T Y_{gt}^T)$ of the similarities $S_{D1}$ between the embeddings within the first domain D1 that are assigned according to the reference assignment $Y_{gt}$, and the similarities $S_{D2}$ between the embeddings within the second domain D2 that are assigned according to the reference assignment $Y_{gt}$, and on the maximum scalar product between the eigenvalues $\lambda(S_{D1})$ of the first matrix $S_{D1}$ and the eigenvalues $\lambda(S_{D2})$ of the second matrix $S_{D2}$.

Afterwards the step 202 may be repeated e.g. for other samples.

Afterwards the encoder may be used in a step 218 for operating the technical system 110.

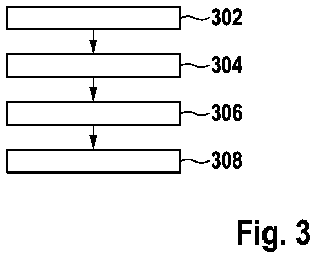

Figure 3 depicts the method of operating the technical system 110.

The method of operating the technical system 110 comprises a step 302 of determining in particular with the capturing device 106 the input.

In a step 304, the method comprises determining in particular with the encoder a representation of the input, i.e. the embeddings.

In a step 306, the method comprises determining the output for operating the technical system 110 depending on the representation of the input.

Operating comprises in one example, determining with the trained encoder $f$ for an in particular previously unseen input, e.g. sample $D_i$, the embeddings $f(D_i) = \{f(d_i)\}_{i=1}^N$ , wherein $N$ is the dimension of the sample.

The operating is preferably applied in computer vision or autonomous driving.

In one example, the embeddings $f(D_i)$ represent objects in a digital image. In this example the goal is e.g. to determine a classification for the objects in the digital images. To this end, the embeddings $f(D_i)$ are classified according to whereto they are mapped.

This classification may be used for tracing objects or for determining actions. In autonomous driving an action of the technical system may be determined depending on the classification.

## Claims

1. Computer implemented method of unsupervised representation learning, **characterized by** providing (204) an input data set comprising samples of a first domain and samples of a second domain, providing (206) a reference assignment between pairs of one sample from the first domain and one sample from the second domain, providing (208) an encoder that is configured to map a sample of the input data set depending on at least one parameter of the encoder to an embedding, providing (210) a similarity kernel for determining a similarity between embeddings, in particular a kernel for determining an preferably Euclidean distance between the embeddings, determining (212) with the encoder embeddings of samples from the first domain and embeddings of samples from the second domain, determining (214) with the similarity kernel similarities for pairs of one embedding of a sample from the first domain and one embedding of a sample from the second domain, determining (216) at least one parameter of the encoder depending on a loss, wherein the loss depends on a first cost for the similarities of pairs of one embedding of a sample from the first domain and one embedding of a sample from the second domain that are assigned to each other according to the reference assignment and an estimate for a second cost for the similarities for pairs of one embedding of a sample from the first domain and one embedding of a sample from the second domain that are assigned to each other according to a possible assignment of a plurality of possible assignments between pairs of one sample from the first domain and one sample from the second domain.

2. The method according to claim 1, **characterized in that** the first cost depends on a sum of the similarities between the embeddings that are assigned to each other according to the reference assignment.

3. The method according to one of the previous claims, **characterized in that** the loss comprises a difference between the first cost and the estimate for the second cost.

4. The method according to one of the previous claims, **characterized by** providing (216) a function that is configured to map a plurality of sums of the similarities between embeddings that are assigned to each other according to different possible assignments to a possible cost for the plurality of possible assignments, wherein the possible cost is weighted by a weight, wherein the function is configured to map a plurality of sums of negatives of the similarities between the embeddings that are assigned to each other according to the different possible assignments to a virtual cost, wherein the weight depends on a projection, in particular a minimum distance Euclidean projection, of the virtual cost to a simplex that has one dimension less than the plurality of possible assignments, and wherein the second cost depends on the possible cost that is weighted by the weight.

5. The method according to one of the previous claims, **characterized by** determining (216) with the similarity kernel a first matrix comprising as its elements similarities for pairs of one embedding of a sample from the first domain and one embedding of a sample from the first domain, and a second matrix comprising as its elements similarities for pairs of one embedding of a sample from the second domain and one embedding of a sample from the second domain, wherein the second cost depends on a sum of the similarities between the embeddings within the first domain that are assigned according to the reference assignment, and the similarities between the embeddings within the second domain that are assigned according to the reference assignment, and on a maximum scalar product between the eigenvalues of the first matrix and the eigenvalues of the second matrix.

6. The method according to one of the previous claims, **characterized by** providing (206) a matrix comprising as its elements the reference assignment, providing (216) a matrix comprising as its elements the possible assignment, providing (214) a matrix comprising as its elements the similarities between respective pairs of embeddings.

7. The method according to one of the previous claims, **characterized by** determining (216) the at least one parameter of the encoder depending on a solution to an optimization problem that is defined depending on the loss.

8. The method according to one of the previous claims, **characterized by** providing (202) samples of the first domain and of the second domain, wherein providing (204) the input data set comprises determining a first number of first samples that is a subset of the samples comprising samples of the first domain and determining a second number of second samples that is a subset of the samples comprising samples of the second domain.

9. The method according to one of the previous claims, **characterized by** operating (218) a technical system (110), wherein operating the technical system (110) comprises determining (302) in particular with a capturing device (106) an input, determining (304) in particular with the encoder a representation of the input, determining (306) an output for operating the technical system (110) depending on the representation of the input.

10. Apparatus (100) for unsupervised representation learning, **characterized in that** the apparatus (100) comprises at least one processor (102) and at least one memory (104) for storing computer readable instructions, that when executed by the at least one processor (102) cause the apparatus to perform steps in the method according one of the claims 1 to 9, wherein the at least one processor (102) is configured to execute the computer readable instructions.

11. Computer program, **characterized in that** the computer program comprises computer readable instructions, that when executed by a computer, cause the computer to perform steps in the method according one of the claims 1 to 9.

Fig. 1

Fig. 2

302

304

306

308

**Fig. 3**

Europäisches
Patentamt
European
Patent Office
Office européen
des brevets

# EUROPEAN SEARCH REPORT

Application Number

EP 22 17 2147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/326660 A1 (KRISHNAN DILIP [US] ET AL) 21 October 2021 (2021-10-21) * paragraphs [0003] – [0007] * * paragraphs [0024] – [0096] * * figures 1A-5C * | 1-11 | INV. G06N3/08 |
| A | US 2019/251480 A1 (GARCIA DURAN ALBERTO [DE] ET AL) 15 August 2019 (2019-08-15) * paragraphs [0002] – [0005] * * paragraphs [0021] – [0076] * * figures 1A-7 * | 1-11 | |

TECHNICAL FIELDS
SEARCHED (IPC)

G06N

The present search report has been drawn up for all claims

| Place of search | Date of completion of the search | Examiner |
|---|---|---|
| Munich | 11 January 2023 | Noll, Joachim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 17 2147**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-01-2023**

| Patent document cited in search report | | Publication date | Patent family member(s) | | Publication date |
|---|---|---|---|---|---|
| US 2021326660 | A1 | 21-10-2021 | AU 2021259170 | A1 | 17-11-2022 |
| | | | CN 114830133 | A | 29-07-2022 |
| | | | EP 4121907 | A1 | 25-01-2023 |
| | | | KR 20220166355 | A | 16-12-2022 |
| | | | US 2021326660 | A1 | 21-10-2021 |
| US 2019251480 | A1 | 15-08-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YAZHE LI ; ROMAN POGODIN ; DANICA J. SUTHERLAND ; ARTHUR GRETTON.** *Self-Supervised Learning with Kernel Dependence Maximization, https://arxiv.org/abs/2106.08320*

- **MARTINS, A. F. T. ; ASTUDILLO, R. F.** From softmax to sparsemax: A sparse model of attention and multi-label classification. *Proceedings of the 33rd International Conference on International Conference on Machine Learning, ICML'16,* 2016